# EUROPEAN PATENT SPECIFICATION

(11) **EP 0 876 536 B1**
(45) Date of publication and mention of the grant of the patent: **30.12.2009**
(21) Application number: 97901554.2
(22) Date of filing: 20.01.1997
(51) Int. Cl.: D21H 27/10, D21H 27/36, B32B 29/00, B65D 1/28, B29C 69/00, B31F 1/00

(54) **PAPER PACKAGING CONTAINERS AND PROCESS FOR MAKING THE SAME**
VERPACKUNGBEHÄLTER AUS PAPIER, UND VERFAHREN FÜR IHRER HERSTELLUNG
CONTENEURS D'EMBALLAGE EN PAPIER ET LEUR PROCEDE DE FABRICATION

(30) Priority: 22.01.1996 IT VE960001
(43) Date of publication of application: 11.11.1998
(73) Proprietor: Trani, Giorgio, 30100 Venezia (IT)
(72) Inventor: Trani, Giorgio, 30100 Venezia (IT)
(74) Representative: Piovesana, Paolo
(86) International application number: PCT/EP1997/000235
(87) International publication number: WO 1997/027364

(56) References cited:
- WO-A-96/03281
- CH-A- 486 303
- GB-A- 491 147
- US-A- 3 408 240
- US-A- 4 026 458
- US-A- 4 048 361
- US-A- 5 022 554

## Description

This invention relates to the use of a paper material for forming threedimensional soft packaging containers for products in the solid, liquid, solidifiable liquid, granular or powder form, a method for forming said packaging containers and a container obtained by the method.

Methods for packaging liquid, solidifiable liquid, granular or powder products in metered quantities for consumption are known.

In one of these methods, half-casings of substantially rigid plastics material, for example polypropylene, are thermodeformed and joined together along their adges to form a cavity, which can then be filled by a traditional filling machine. If the product is to be used in the solid, liquid, granular or powder state, the package obtained in this manner is ready for marketing after sealing. If however the product is to be used in the solid state (for example ice-cream), after the filling operation the container filled with the solid or liquid product and then sealed is refrigerated and preserved under refrigerated conditions until its consumption.

Independently of the nature of the packaged material, these known containers have the advantage of being formable in practically any shape, but also have certain drawbacks, and in particular:
- a considerable cost, related to the cost of the plastics material used,
- practically no ecological characteristics, given the non-biodegradable nature of the plastics used,
- a certain weight, with consequent transport costs,
- a space requirement after use, in that the container cannot be substantially reduced in volume after use compared with the full container.

It is also known to package generally liquid products using a continuous tubular element of polythylene - or bipolyethylene - coated cardboard which is filled in portions separated by transverse welds, transverse cuts then being made through said welds. The package obtained is generally of tetrahedral, parallelepiped or cylindrical shape, depending on the manner in which the transverse welds are made and on the folding operations to which the package may be subjected after its separation from the continuous tubular element.

This known method considerably accelerates the packaging operations but has certain limitations in terms of obtainable shapes, space requirement of the packaging container after its use, and cost.

CH-A-48603 describes a composite including a layer of yieldable paper, a layer of aluminium and a layer of polythene.

US-A-4048361 describes materials composite, having resistance to gas permation, including a layer of paper and a layer of synthetic material.

US-A-4026458 describes a paper board container in which the depth of the shape is obtained through a plurality of pleated folds.

US-A-5022554 describes tableware products realized through paper joined with matalized plastics. US-A-2624 245 discloses a modified paper which is extendible and may comprise a water-repellent coating.

An object of the invention is to using a paper material for forming soft, packaging containers of practically any shape for solid, granular, powder, liquid or solidifiable liquid products, which is of low costs.

A further object of the invention is to use a paper material for very light packaging containers such as to minimally impinge on packing and transport costs.

A further object of the invention is to use a paper material which enables the containers to be reduced to minimum volume after use.

A further object of the invention is to provide a container which is biodegradable.

A further object of the invention is to provide a method which enables traditional commercially available packaging equipment to be used.

These and further objects are attained according to the invention through the use of a paper material as described in claim 1.

According to the invention a method is also provided as claimed in claim 13.

Some preferred embodiments of the present invention are described in detail hereinafter with reference to the accompanying drawings, in which:
Figure 1 is an enlarged section showing a portion of paper material according to the invention;
Figure 2 is a schematic representation of one embodiment of the method according to the invention;
Figure 3 is a perspective view of the open mould of Figure 2, to a larger scale;
Figure 4 is a vertical section through a closed mould during the stage preceding the introduction of pressurized fluid;
Figure 5 shows the same view as Figure 4 in the stage following the introduction of pressurized fluid;
Figure 6 is a perspective view of a packaging container extracted from the mould and awaiting filling;

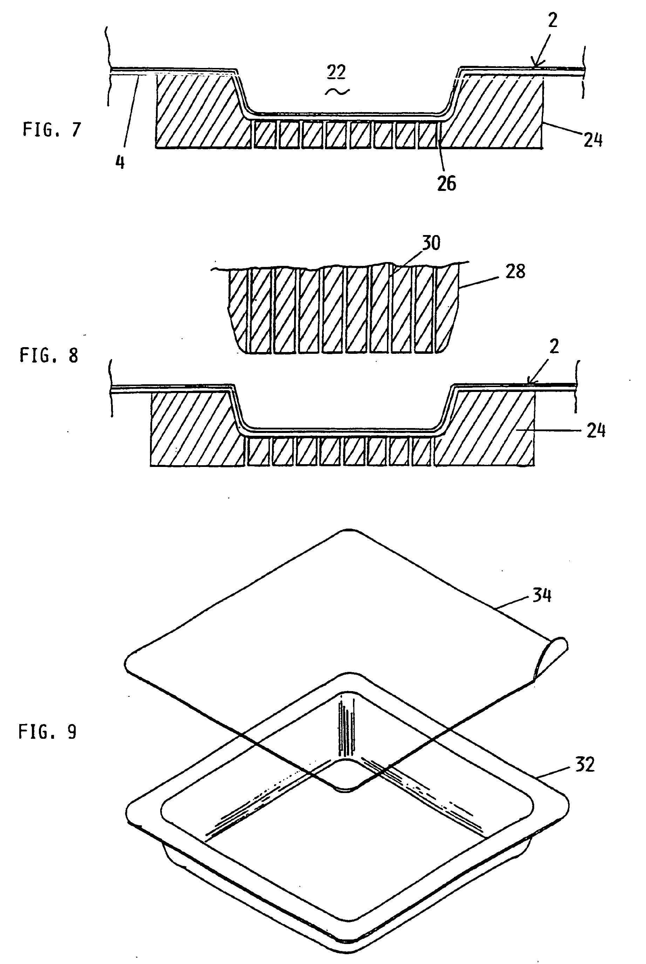

Figure 7 is a schematic cross-section through an open mould used for implementing a further embodiment of the method;
Figure 8 shows a futher embodiment of the mould of Figure 7;
Figure 9 shows a packaging container extracted from the mould and awaiting filling; and
Figure 10 shows a different embodiment of a portion of paper material.

As can be seen from the figures, the paper material 2 according to the invention consists of a yieldable paper sheet 4 to which during the preparation stage a food-suitable or other chemical additive of impermeabilizing, water-repellent and anti-grease characteristics is added. This additive can advantageously be a fluorinated compound, colophony, formaldehyde, titanium dioxide, a polymer mix, waxes, paraffins or substances having the property of reducing or nullifying the degree of porosity of the yieldable paper.

In other cases the chemical additive is not added during the paper preparation stage but is sprayed onto the already prepared yieldable paper by traditional methods. The paper 4 has a degree of yieldability such as to enable it to be stretched permanently in a transverse and longitudinal direction by at least 10% and preferably 20%, and has an ultimate tensile strength not less than 4000 m so as to ensure that the final desired configuration can be obtained without tearing.

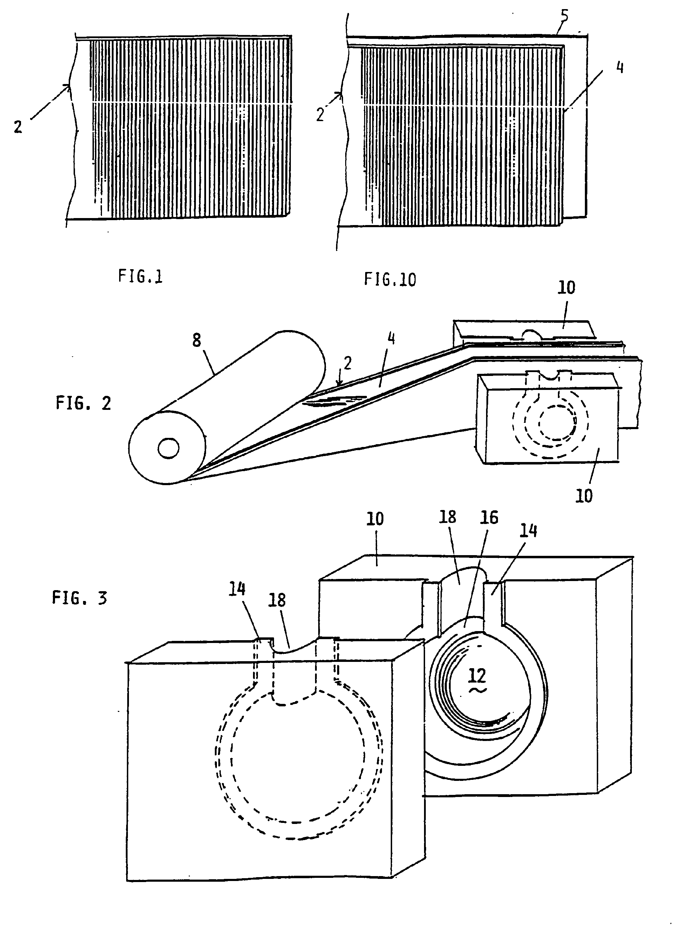

The paper material is preferably prepared by traditional methods which do not form part of the invention and are not further described. In the embodiment shown in Figure 2, the paper material is wound onto a bobbin 8 and is folded longitudinally so that the two edges face each other.

In the embodiment shown in Figures 2-4, the method of the invention also comprises the use of a mould formed from two half-moulds 10 movable relative to each other and each comprising a cavity 12 bounded by a rim 14 comprising an interruption 16. The cavities 12 of the half-moulds 10, the rims 14 which bound them and the interruptions 16 in the rims 14 perfectly mate when the two half-moulds 10 are brought into mutual contact.

On the drawings the two half-moulds 10 are shown with a single impression for simplicity, whereas in practice it is preferable to use multi-impression moulds to accelerate the packaging operations.

The cavity 12 of each half-mould 10 extends outwards in the form of a conduit 18 which opens at the interruption 16 provided in the rim 14 bounding the cavity 12, and which mates with the adjacent conduit in the other half-mould 10.

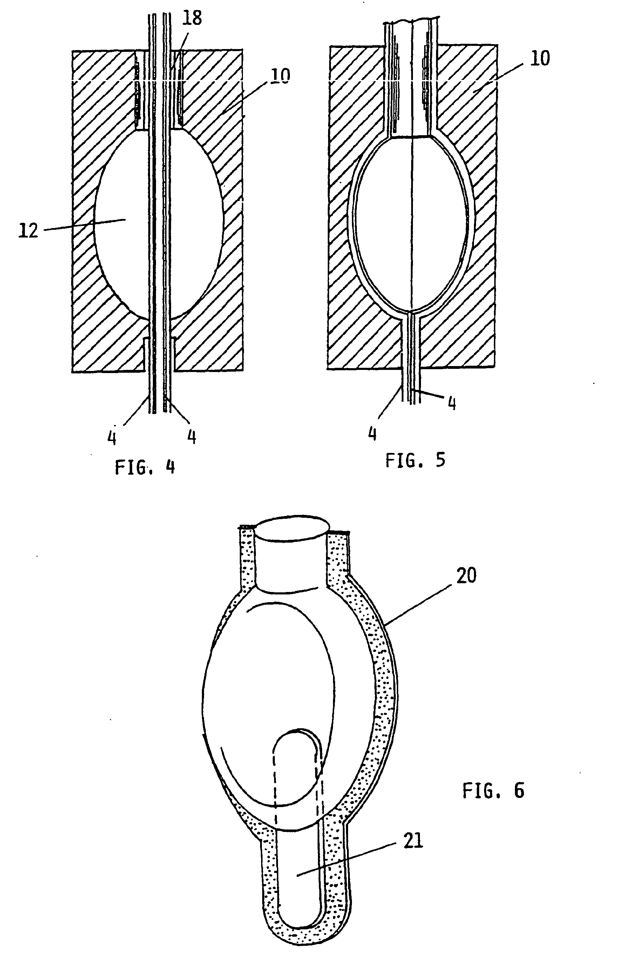

In this embodiment, the method of the invention is as follows: the paper material is firstly treated with a preferably peelable, heat-softenable adhesive applied as a contour corresponding to the contour of the desired shape. After the sheet 2 has been folded longitudinally into two parts and has then been positioned folded in this manner between the two half-moulds 10, these latter are made to approach each other so as to retain it between them (see Figure 4). The two facing rims 14 are then pressed together and the adhesive softened, with consequent joining together of the two parts of the sheet included between them, with the obvious exception of the interruption 16.

After this joint has been made, compressed air is fed through the conduit 18 to stretch the two sheets of paper material retained between the rims 14, so that they adhere to the surface of the respective cavity 12 (see Figure 5).

On termination of this blowing stage the two half-moulds 10 are spaced apart to allow removal of an impermeabilized paper packaging container 20 having the configuration corresponding to the cavities of the half-moulds 10, the configuration being permanent because of the permanent deformation to which the paper material has been subjected (see Figure 6).

This container can then be fed for filling, preferably carried out by automatic machines, followed by sealing the interruption 16, through which the product to be packaged was fed and which can be of liquid, paste, granular or powder form.

Depending on the nature of this product, the packaging container 20, once sealed, can be subjected to further processing or transferred to storage. For example, if the product is to be used in the liquid (shampoo, detergent, milk, water, etc.), granular or powder state, it can be directly stored. If the product has been temporarily heated to be transformed into the liquid state, although being solid at ambient temperature (chocolate, cheese or soap), it is sufficient to await its cooling to cause it to assume the shape of the container 20, and maintain this shape even after this latter has been removed at the moment of consumption. If however the product is a liquid for preparing an ice-cream or water ice, after filling it must be frozen, which can be done just prior to consumption.

In short, independently of the product to be packaged, this first embodiment of the method of the invention is based on the principle of using the impermeabilizing, water-repellent and anti-grease additive not only for its traditional purpose of impermeabilizing the yieldable paper against the product during filling and during its storage, but also for impermeabilizing the paper against air and hence making a forming operation with paper possible which has never been able to be effected in the past without using pleats. A further purpose is to form the barrier necessary for the product to remain in the packaging container. Taking into account that the impermeabilization to air helps for the formation of the packaging whereas the impermeabilization to the content of the packaging helps to the conservation of such a content, in some cases in which the product to be conserved is not liquid but it is for example solid, granular, powder it is sufficient that the material additivated to the paper presents its impermeabilizing characteristics to air only for a limited period. necessary to the realization of the packaging.

In a second embodiment of the method according to the invention, after the edges of the paper material have been joined together, not air but the actual liquid product to be packaged is fed through the conduit 18 under pressure, to stretch the yieldable paper until it adheres to the walls of the half-mould 10. Again in this case, the treatment to which the paper is subjected can depend on the nature of the product to be packaged, but in all cases the invention provides for forming the packaging container within the mould by the action of the actual product to be packaged. If this product is solidifiable, ie if it is a solid at ambient temperature and has been previously heated to facilitate the filling, or if it is a liquid at ambient temperature but is to be refrigerated after filling, the invention involves mutual action between the liquid product forces the paper material to assume the form determined by the mould within which it is housed, whereas during solidification it is the container itself, previously been shaped by the liquid, which forms the mould for the liquid during its solidification.

In both embodiments of the method of the invention, and in particular for packaging edible solidifiable liquid products, the filling stage can be preceded by the introduction into the mould of a traditional stick 21, for example of wood or plastic, which when the product has solidified remains embedded therein to form an essential part of packaged products hand-held during consumption.

In a third embodiment of the method of the invention, the paper material 2 is made to face the cavity 22 of a mould 24 and is constrained thereto along the continuous edge of said cavity. The mould is then put under vacuum via suitable suction channels 26 provides in it so as to cause said material to stretch tangentially until it adheres to the surface of said cavity. To achieve a greater stretching effect a complementary punch 28 is made to face the cavity, to contribute mechanically in stretching the paper during suction. This mechanical effect is preferably combined with a pneumatic effect, for which purpose the punch 28 is provided with a plurality of channels 30, through which the paper material 2 can be exposed to a jet of possibly hot air. The tray-type packaging container 32 obtained in this manner can then be filled with the product to be packaged, and then be closed by sealing with a transparent film 34 or by applying a complementary inverted tray with the edges of both trays previously coated with a traditional adhesive.

In any event independently of embodiment used, the use of the paper material according to the invention and the method for forming the desired packaging containers therefrom have considerable advantages, and in particular:
- they enable packaging containers to be obtained practically without any limit on their shape,
- they enable traditional commercially available forming and filling equipment to be used,
- they enable lightweight low-cost packaging containers to be formed which can be reduced to minimum bulk after use and which are biodegradable.

In a further embodiment shown in Figure 10, an impermeabilizing film 5 of yieldability and strength compatible with those of the paper material is applied to a surface of the paper material.

This impermeabilizing film is preferably a plastics film obtained from polyethylene or another thermoplastic material, or an aluminium alloy. By virtue of the presence of the impermeabilizing film, the paper material obtained in this manner has the further advantage of enabling the joint between the two sheets to be made by traditional thermowelding methods.

In a further embodiment, to achieve a more robust structure two sheets of paper material are used, bonded together by an extrusion of polyethylene or of a traditional adhesive.

## Claims

1. A use of an extendable paper material for forming three-dimensional packaging containers **characterised in that** the extendible material consists of a sheet of yieldable paper having a degree of yieldability of not less than 10% in any direction, to which at least one impermeabilizing agent has been added, having the property of reducing the degree of porosity of said extendible paper sheet in order to obtain said container due to stretching caused by said compressed air.

2. A use as claimed in claim 1, **characterised in that** the chemical additive has water-repellent characteristics.

3. A use as claimed in claim 1, **characterised in that** the chemical additive has anti-grease characteristics.

4. A use as claimed in claim 1, **characterised in that** the chemical additive is waxes and/or paraffins.

5. A use as claimed in claim 1, **characterised in that** the chemical additive is colophony, a polymer mix or formaldehyde.

6. A use as claimed in claim 1, **characterised in that** the chemical additive is a fluorinated compound.

7. A use as claimed in claim 1, **characterised in that** the chemical additive is titanium dioxide.

8. A use as claimed in claim 1, **characterised in that** one of its surfaces is covered with a film of impermeabilizing material.

9. A use as claimed in claim 4, **characterised in that** the material consists of two yieldable sheets of paper bonded together by an extrusion of polyethylene or of a traditional adhesive.

10. A use as claimed in claim 5, **characterised in that** the impermeabilizing film consists of thermoformable and thermoweldable material.

11. A use as claimed in claim 5, **characterised in that** the impermeabilizing film is of polyethylene.

12. A use as claimed in claim 5, **characterised in that** the impermeabilizing film is of aluminium alloy.

13. A method for forming packaging containers by using paper material in accordance with one or more of claims 1 to 12, **characterised in that** a sheet (2) of paper material is made to face the cavity of at least one mould and is constrained thereto along the continuous edge which bounds said cavity, after which said sheet of paper material is caused to stretch tangentially until it adheres to the inner surface of said cavity to obtain a concave tray having the shape of said cavity, to be fed to subsequent filling and closure.

14. A method as claimed in claim 13 **characterised in that** the sheet of paper material is stretched by vacuum created between it and the inner wall of said cavity.

15. A method as claimed in claim 13, **characterised in that** the sheet of paper material is stretched by mechanically urging the sheet into the cavity by a punch having a shape substantially complementary to that of said cavity.

16. A method as claimed in claim 15, **characterised in that** the mechanical effect is supplemented by a pneumatic effect by feeding a compressed air jet onto the sheet of paper material through said punch.

17. A method as claimed in claim 14, **characterised by** using hot compressed air.

18. A method as claimed in claim 13, **characterised in that** after its filling, the concave tray is sealed with a material film applied to it along its edge.

19. A method as claimed in claim 13, **characterised in that** after its filling, the concave tray is closed by another, which is positioned inverted on the first and glued to it along their contacting edges.

20. A method as claimed in claim 13, **characterised in that**:
- the surface of the paper material is treated with a heat-softenable adhesive applied in a pattern corresponding to the contour of the form of the container,
- two sheets (2) of paper material are laid one on the other,
- the two sheets (2) are subjected to softening of the adhesive along a perimetral line (14) of the predetermined pattern, comprising at least one interruption (16), to cause softening of the adhesive and subsequent joining together of the sheets,
- a fluid is fed under pressure through said interruption (16) into the interspace bounded by said sheets (2) maintained between two cloased half-moulds (10) which form between them a cavity (12) bounded by said perimetral constraint line (14), to hence cause stretching of said sheets (2), which adhere to the walls of said cavities (12),
- the volume bounded by said sheets (2) is filled with the product to be packaged, and
- the perimetral line is closed in correspondence with said interruption (16).

21. A method as claimed in claim 20, **characterised in that** the two sheets (2) to be coupled together are obtained by longitudinal doubling of a continuous web (8).

22. A method as claimed in claim 20 **characterised in that** the two sheets (2) are joined together along said perimetral line by thermowelding.

23. A method as claimed in claim 20, **characterised in that** the two sheets (2) are joined together along said perimetral line by ultrasonic welding.

24. A method as claimed in claim 20, **characterised in that** said two sheets (2) are joined together while retained between said half-moulds (10).

25. A method as claimed in claim 20, **characterised in that** the fluid is the actual product to be packaged.

26. A packaging container obtained by the method claimed in one or more of claims 13 to 25, **characterised by** consisting of at least one concave tray to the edge of which, after filling, there is applied a closure film.

27. A packaging container obtained by the method claimed in one or more of claims 13 to 25, **characterised by** consisting of two concave trays joined together along their adjacent edges.

## Patentansprüche

1. Verwendung eines streckbaren bzw. dehnbaren Papiermaterials zum Bilden bzw. Formen dreidimensionaler Verpackungsbehälter, **dadurch gekennzeichnet, dass** das erstreckbare bzw. dehnbare Material aus einem Blatt bzw. Bogen von nachgiebigem Papier besteht, das einen Grad von Nachgiebigkeit von nicht weniger als 10 % in irgendeiner Richtung hat, zu welchem wenigstens ein Undurchlässigkeits- bzw. Dichtigkeitsmittel hinzugefügt worden ist, das die Eigenschaft des Verringerns des Grades der Porosität des streckbaren bzw. dehnbaren Papierblattes bzw. Papierbogens hat, um den Behälter infolge des Streckens bzw. Ziehens zu erlangen, das durch die Druckluft veranlasst wurde.

2. Verwendung wie in Anspruch 1 beansprucht, **dadurch gekennzeichnet, dass** das chemische Additiv Wasser abweisende bzw. Wasser abstoßende Eigenschaften hat.

3. Verwendung wie in Anspruch 1 beansprucht, **dadurch gekennzeichnet, dass** das chemische Additiv Antifett-Eigenschaften hat.

4. Verwendung wie in Anspruch 1 beansprucht, **dadurch gekennzeichnet, dass** das chemische Additiv aus Wachsen und/oder Paraffinen besteht.

5. Verwendung wie in Anspruch 1 beansprucht, **dadurch gekennzeichnet, dass** das chemische Additiv Kolophonium, ein Polymergemisch oder Formaldehyd ist.

6. Verwendung wie in Anspruch 1 beansprucht, **dadurch gekennzeichnet, dass** das chemische Additiv ein fluoriertes bzw. mit Fluor behandeltes Compound bzw. Zusammensetzung ist.

7. Verwendung wie in Anspruch 1 beansprucht, **dadurch gekennzeichnet, dass** das chemische Additiv Titandioxyd ist.

8. Verwendung wie in Anspruch 1 beansprucht, **dadurch gekennzeichnet, dass** eine seiner Oberflächen mit einem Film bzw. einer dünnen Schicht von Undurchlässigkeits- bzw. Dichtigkeitsmaterial bedeckt bzw. umhüllt ist.

9. Verwendung wie in Anspruch 4 beansprucht, **dadurch gekennzeichnet, dass** das Material aus zwei nachgiebigen Blättern bzw. Bögen aus Papier besteht, die durch eine Extrusion von Polyethylen oder von einem herkömmlichen Klebemittel zusammen verbunden bzw. geklebt werden.

10. Verwendung wie in Anspruch 5 beansprucht, **dadurch gekennzeichnet, dass** der Undurchlässigkeits- bzw. Dichtigkeitsfilm bzw. dünne Folie aus thermoformbarem und thermoschweißbarem Material besteht.

11. Verwendung wie in Anspruch 5 beansprucht, **dadurch gekennzeichnet, dass** der Undurchlässigkeits- bzw. Dichtigkeitsfilm bzw. dünne Schicht aus Polyethylen besteht.

12. Verwendung wie in Anspruch 5 beansprucht, **dadurch gekennzeichnet, dass** der Undurchlässigkeits- bzw. Dichtigkeitsfilm bzw. dünne Schicht aus Aluminiumlegierung besteht.

13. Verfahren zum Bilden bzw. Formen von Verpackungsbehältern durch Verwenden von Papiermaterial in Übereinstimmung mit einem oder mehreren von Ansprüchen 1 bis 12, **dadurch gekennzeichnet, dass** ein Blatt bzw. Bogen (2) von Papiermaterial gebildet ist, um der Kavität bzw. dem Hohlraum von wenigstens einer Form bzw. einem Gesenk zugewandt zu sein und dazu entlang des kontinuierlichen Randes gedrängt wird, welcher die Kavität bzw. den Hohlraum begrenzt, wonach das Blatt bzw. der Bogen von Papiermaterial veranlasst wird, sich tangential zu strecken bzw. zu ziehen, bis es bzw. er an der inneren Oberfläche der Kavität bzw. des Hohlraums haftet, um eine konkave Schale bzw. Wanne zu erlangen, die die Form der Kavität bzw. des Hohlraums hat, um nachfolgend gefüllt und verschlossen zu werden.

14. Verfahren wie in Anspruch 13 beansprucht, **dadurch gekennzeichnet, dass** das Blatt bzw. der Bogen von Papiermaterial durch Vakuum gestreckt bzw. gezogen wird, das zwischen ihm und der inneren Wand der Kavität bzw. des Hohlraums erzeugt wird.

15. Verfahren wie in Anspruch 13 beansprucht, **dadurch gekennzeichnet, dass** das Blatt bzw. der Bogen von Papiermaterial durch mechanisches Drängen des Blattes bzw. des Bogens in die Kavität bzw. den Hohlraum gestreckt bzw. gezogen wird, und zwar durch ein Presswerkzeug bzw. einen Stempel, das bzw. der eine Form hat, die im Wesentlichen komplementär zu der der Kavität bzw. des Hohlraums ist.

16. Verfahren wie in Anspruch 15 beansprucht, **dadurch gekennzeichnet, dass** der mechanische Einfluss bzw. Wirkung durch einen pneumatischen Einfluss bzw. Wirkung ergänzt wird, und zwar durch Zuführen eines Druckluftstrahls auf das Blatt bzw. den Bogen von Papiermaterial durch das Presswerkzeug bzw. den Stempel.

17. Verfahren wie in Anspruch 14 beansprucht, **gekennzeichnet durch** Verwenden von heißer bzw. warmer Druckluft.

18. Verfahren wie in Anspruch 13 beansprucht, **dadurch gekennzeichnet, dass** nach ihrer Befüllung die konkave Schale bzw. Wanne mit einem Materialfilm bzw. dünner Schicht abgedichtet wird, der bzw. die entlang ihres Randes angewendet bzw. angebracht wird.

19. Verfahren wie in Anspruch 13 beansprucht, **dadurch gekennzeichnet, dass** nach ihrer Befüllung die konkave Schale bzw. Wanne durch eine andere geschlossen wird, welche invertiert bzw. umgekehrt auf der ersten positioniert wird und an sie entlang ihrer kontaktierenden Ränder geklebt wird.

20. Verfahren wie in Anspruch 13 beansprucht, **dadurch gekennzeichnet, dass**:
- die Oberfläche des Papiermaterials mit einem unter Wärmeeinfluss erweichbaren Klebemittel behandelt wird, das in einem Muster entsprechend der Kontur der Form des Behälters angewendet bzw. angebracht wird,
- zwei Blätter bzw. Bögen (2) von Papiermaterial übereinander gelegt werden,
- die zwei Blätter bzw. Bögen (2) dem Erweichen des Klebemittels entlang einer perimetralen Linie (14) des vorherbestimmten Musters ausgesetzt werden, die wenigstens eine Unterbrechung (16) aufweist, um das Erweichen des Klebemittels und anschließendes Verbinden bzw. Zusammenfügen der Blätter bzw. Bögen zu bewirken,
- ein Fluid unter Druck durch die Unterbrechung (16) in den Zwischenraum zugeführt wird, der durch die Blätter bzw. Bögen (2) begrenzt wird, die zwischen zwei geschlossenen Halbformen bzw. Halbgesenken (10) gehalten werden, welche zwischen ihnen eine Kavität bzw. einen Hohlraum (12) bilden, die bzw. der durch die perimetrale Beschränkungslinie (14) begrenzt wird, um folglich Strecken bzw. Ziehen der Blätter bzw. Bögen (2) zu veranlassen, welche an den Wänden der Kavitäten bzw. Hohlräume (12) haften,
- das Volumen, das durch die Blätter bzw. Bögen (2) begrenzt wird, mit dem zu verpackenden Erzeugnis gefüllt wird, und
- die perimetrale Linie in Übereinstimmung mit der Unterbrechung (16) geschlossen wird.

21. Verfahren wie in Anspruch 20 beansprucht, **dadurch gekennzeichnet, dass** die zwei Blätter bzw. Bögen (2), um zusammengekoppelt bzw. verbunden zu werden, durch Längsverdoppelung bzw. Längsfaltung einer kontinuierlichen Bahn (8) erlangt werden.

22. Verfahren wie in Anspruch 20 beansprucht, **dadurch gekennzeichnet, dass** die zwei Blätter bzw. Bögen (2) entlang der perimetralen Linie durch Thermoschweißen zusammen verbunden werden.

23. Verfahren wie in Anspruch 20 beansprucht, **dadurch gekennzeichnet, dass** die zwei Blätter bzw. Bögen (2) entlang der perimetralen Linie durch Ultraschallschweißen zusammen verbunden werden.

24. Verfahren wie in Anspruch 20 beansprucht, **dadurch gekennzeichnet, dass** die zwei Blätter bzw. Bögen (2) zusammen verbunden werden, während sie zwischen den Halbformen bzw. Halbgesenken (10) gehalten werden.

25. Verfahren wie in Anspruch 20 beansprucht, **dadurch gekennzeichnet, dass** das Fluid das eigentliche zu verpackende Erzeugnis ist.

26. Verpackungsbehälter, der durch das Verfahren erlangt wird, das in einem oder mehreren von Ansprüchen 13 bis 25 beansprucht ist, **gekennzeichnet durch** Bestehen bzw. Zusammengesetzt sein von wenigstens einer konkaven Schale bzw. Wanne, wobei an ihrem Rand nach dem Befüllen ein Verschlussfilm bzw. dünne Verschlussschicht angewendet bzw. angebracht wird.

27. Verpackungsbehälter, der durch das Verfahren erlangt wird, das in einem oder mehreren der Ansprüche 13 bis 25 beansprucht wird, **gekennzeichnet durch** Bestehen bzw. Zusammengesetzt sein von zwei konkaven Schalen bzw. Wannen, die entlang ihrer angrenzenden Ränder zusammen verbunden werden.

## Revendications

1. Utilisation d'un matériau de papier extensible pour former des conteneurs d'emballage tridimensionnel, **caractérisée en ce que** le matériau extensible consiste en une feuille de papier déformable ayant un degré de déformabilité de pas moins que 10 % dans une direction quelconque, à laquelle au moins un agent d'imperméabilisation a été additionné, ayant la propriété de réduire le degré de porosité de ladite feuille de papier extensible afin d'obtenir ledit conteneur grâce à l'étirement provoqué par ledit air compressé.

2. Utilisation comme revendiquée dans la revendication 1, **caractérisée en ce que** l'additif chimique a des caractéristiques hydrofuges.

3. Utilisation comme revendiquée dans la revendication 1, **caractérisée en ce que** l'additif chimique a des caractéristiques anti-graisse.

4. Utilisation comme revendiquée dans la revendication 1, **caractérisée en ce que** l'additif chimique est des cires et/ou des paraffines.

5. Utilisation comme revendiquée dans la revendication 1, **caractérisée en ce que** l'additif chimique est de la colophane, un mélange de polymère ou du formaldéhyde

6. Utilisation comme revendiquée dans la revendication 1, **caractérisée en ce que** l'additif chimique est un composant fluoré.

7. Utilisation comme revendiquée dans la revendication 1, **caractérisée en ce que** l'additif chimique est du dioxyde de titane.

8. Utilisation comme revendiquée dans la revendication 1, **caractérisée en ce que** l'une de ses surfaces est couverte d'un film en matériau imperméabilisant.

9. Utilisation comme revendiquée dans la revendication 4, **caractérisée en ce que** le matériau consiste en deux feuilles de papier déformables liées ensemble par une extrusion de polyéthylène ou d'un adhésif traditionnel.

10. Utilisation comme revendiquée dans la revendication 5, **caractérisée en ce que** le film imperméabilisant consiste en un matériau thermoformable ou thermosoudable.

11. Utilisation comme revendiquée dans la revendication 5, **caractérisée en ce que** le film imperméabilisant est en polyéthylène.

12. Utilisation comme revendiquée dans la revendication 5, **caractérisée en ce que** le film imperméabilisant est en alliage d'aluminium.

13. Procédé pour former des conteneurs d'emballage en utilisant un matériau de papier selon une ou plusieurs des revendications 1 à 12, **caractérisé en ce qu'**une feuille (2) de matériau de papier fait face à la cavité d'au moins un moule et est contrainte sur celui-ci le long du bord continu qui délimite ladite cavité, après quoi ladite feuille de matériau de papier est étirée tangentiellement jusqu'à ce qu'elle adhère à la surface interne de ladite cavité pour obtenir un plateau concave ayant la forme de ladite cavité, pour être amenée à un remplissage et une fermeture ultérieurs.

14. Procédé comme revendiqué dans la revendication 13, **caractérisé en ce que** la feuille de matériau de papier est étirée en créant un vide entre celle-ci et la paroi interne de ladite cavité.

15. Procédé comme revendique dans la revendication 13, **caractérisé en ce que** la feuille de matériau de papier est étirée en poussant mécaniquement la feuille dans la cavité par un poinçon ayant une forme sensiblement complémentaire à celle de ladite cavité.

16. Procédé comme revendiqué dans la revendication 15, **caractérisé en ce que** l'effet mécanique est complété par un effet pneumatique en alimentant un jet d'air compressé sur la feuille de matériau de papier à travers ledit poinçon.

17. Procédé comme revendiqué dans la revendication 14, **caractérisé par** l'utilisation d'air compressé chaud.

18. Procédé comme revendiqué dans la revendication 13, **caractérisé en ce que** après son remplissage, le plateau concave est fermé avec un film appliqué sur celui-ci le long de son bord.

19. Procédé comme revendiqué dans la revendication 13, **caractérisé en ce que** après son remplissage, le plateau concave est fermé par un autre, qui est positionné inversé sur le premier et collé sur celui-ci le long de leurs bords en contact.

20. Procédé comme revendiqué dans la revendication 13, **caractérisé en ce que** :
- la surface de matériau de papier est traitée avec un adhésif thermosouple appliqué suivant un motif correspondant au contour de la forme du conteneur,
- deux feuilles (2) de matériau de papier sont étendues l'une sur l'autre,
- les deux feuilles (2) sont soumises à un assouplissement de l'adhésif le long d'une ligne périmétrique (14) du motif prédéterminé, comprenant au moins une interruption (16), pour que l'adhésif s'assouplisse et soit relié ultérieurement avec les feuilles ensemble,
- un fluide est amené sous pression à travers ladite interruption (16) dans l'interstice délimité par lesdites feuilles (2) maintenu entre deux demi-moules fermés (10) qui forment entre eux une cavité (12) délimitée par la ladite ligne de contrainte périmétrique (14) de manière alors à étirer lesdites feuilles (2) qui adhèrent sur les parois desdites cavités (12),
- le volume délimité par lesdites feuilles (2) est rempli avec le produit pour être emballé, et
- la ligne périmétrique est fermée en correspondance avec ladite interruption (16).

21. Procédé comme revendiqué dans la revendication 20, **caractérisé en ce que** les deux feuilles (2) à coupler ensemble sont obtenues par doublage longitudinal d'un tissu continu (8).

22. Procédé comme revendiqué dans la revendication 20, **caractérisé en ce que** les deux feuilles (2) sont reliées ensemble le long de ladite ligne périmétrique par thermosoudage.

23. Procédé comme revendiqué dans la revendication 20, **caractérisé en ce que** les deux feuilles (2) sont reliées ensemble le long de ladite ligne périmétrique par soudage ultrasonique.

24. Procédé comme revendiqué dans la revendication 20, **caractérisé en ce que** lesdites deux feuilles (2) sont reliées ensemble tout en étant maintenues entre lesdits demi-moules (10).

25. Procédé comme revendiqué dans la revendication 20, **caractérisé en ce que** le fluide est le produit réel à emballer.

26. Conteneur d'emballage obtenu selon le procédé revendiqué selon une ou plusieurs des revendications 13 à 25, **caractérisé en ce qu'**il consiste en au moins un plateau concave sur le bord duquel, après remplissage, un film de fermeture est appliqué.

27. Conteneur d'emballage obtenu selon le procédé revendiqué selon une ou plusieurs des revendications 13 à 25, **caractérisé en ce qu'**il consiste en deux plateaux concaves reliés ensemble le long de leurs bords adjacents.
